(19) Europäisches Patentamt
European Patent Office
Office européen des brevets

(11) EP 1 614 712 B1

(12) EUROPEAN PATENT SPECIFICATION

(45) Date of publication and mention of the grant of the patent:
**04.08.2010 Bulletin 2010/31**

(21) Application number: **04727125.9**

(22) Date of filing: **13.04.2004**

(51) Int Cl.:
***C08L 23/00*** *(2006.01)* ***C08K 5/053*** *(2006.01)*
***C08K 5/375*** *(2006.01)* ***C08K 5/24*** *(2006.01)*
***C08K 3/22*** *(2006.01)* ***C08L 23/10*** *(2006.01)*

(86) International application number:
**PCT/JP2004/005247**

(87) International publication number:
**WO 2004/092263 (28.10.2004 Gazette 2004/44)**

# (54) POLYOLEFIN RESIN COMPOSITION AND COMBINATION OF RESIN SHAPED BODIES USING SAME

POLYOLEFINHARZZUSAMMENSETZUNG UND KOMBINATION VON HARZFORMKÖRPERN UNTER DEREN VERWENDUNG

COMPOSITION DE RESINE POLYOLEFINIQUE ET MELANGES DE RESINES, COMBINAISONS DE CORPS FORMES EN RESINE COMPRENANT CETTE COMPOSITION

(84) Designated Contracting States:
**AT BE BG CH CY CZ DE DK EE ES FI FR GB GR HU IE IT LI LU MC NL PL PT RO SE SI SK TR**

(30) Priority: **16.04.2003 JP 2003112094**

(43) Date of publication of application:
**11.01.2006 Bulletin 2006/02**

(73) Proprietor: **Prime Polymer Co., Ltd.**
**Minato-ku**
**Tokyo (JP)**

(72) Inventor: **MURAKAMI, Shigeru**
**Ichihara-shi,**
**Chiba, 2990107 (JP)**

(74) Representative: **Gille Hrabal Struck Neidlein Prop Roos**
**Patentanwälte**
**Brucknerstrasse 20**
**40593 Düsseldorf (DE)**

(56) References cited:
**WO-A-02/083789**
**GB-A- 2 252 324**
**JP-A- 2 292 346**
**JP-A- 3 163 712**
**JP-A- 8 231 779**
**JP-A- 9 095 562**
**JP-A- 9 095 566**
**JP-A- 11 312 418**
**JP-A- 2002 042 555**
**JP-A- 2002 042 574**
**JP-A- 2002 226 643**
**JP-A- 2003 022 716**
**US-A- 4 839 408**
**US-A1- 2002 177 638**
**US-B1- 6 251 972**
**US-B1- 6 538 056**
**US-B1- 6 541 547**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 614 712 B1

## Description

### TECHNICAL FIELD

The present invention relates to a polyolefin-based resin composition that is excellent in environmental stability, and more particularly to a stable polyolefin-based resin composition that is substantially prevented from suffering from deterioration in quality of resin, especially, even when used in contact with or near to vinyl chloride-based resins.

Further, the invention relates to a combination of a vinyl chloride-based resin molded article and a molded article made of the above polyolefin-based resin composition.

### BACKGROUND ARTS

At present, vinyl chloride-based resins have been extensively used in various applications because of excellent properties and low costs thereof, and more frequently used as covering or sheathing materials for electric wires or cables, interior materials for housing such as walls and floors. Currently, there is a demand for a huge number and a large amount of vinyl chloride-based resins. However, when recycling or disposing of the vinyl chloride-based resins after use, there might be such a probability that plasticizers contained therein and dioxin generated upon burning give adverse influences on human bodies and environment. For this reason, it has now been attempted to replace the vinyl chloride-based resins with polyolefin-based resin materials. In particular, such a tendency of replacement with polyolefin-based resins is more remarkable in domestic appliance and automobile makers. For example, composite materials made of polyolefin and metal hydrate have been increasingly used as covering or sheathing materials for electric wires or cables, i.e., as so-called eco-cables as well as tapes and tubes.

However, since the vinyl chloride-based resins are inexpensive and have a good flame retardancy in themselves as well as excellent mechanical properties, the vinyl chloride-based resins are inhibited from being fully replaced with polyolefin-based resin materials. As a result, the vinyl chloride-based resins and the polyolefin-based resins are presently used together either in contact with or near to each other.

Meanwhile, in the course of studies on improved polypropylene-based resin compositions, the present inventors have found that when a plurality of molded articles made of the same polyolefin-based resin composition using an ordinary phenol-based antioxidant in combination with an ordinary phosphorus-based antioxidant (refer to, for example, Japanese Patent Application Laid-open No. Sho 62-34934) were used in different places, a part thereof suffered from significant deterioration notwithstanding they were used under similar environmental conditions. As a result of seeking causes for such a phenomenon, the inventors have found that the polyolefin-based resin compositions used in contact with or extremely near to vinyl chloride-based resins underwent more severe deterioration than others. As a result of further studies on the deteriorated resin compositions, it has been found that the oxidative deterioration of the polyolefin-based resin is accelerated by plasticizers dissipated from the vinyl chloride-based resins or, in some cases, hydrogen chloride gas generated therefrom, when used under a relatively high temperature condition.

### DISCLOSURE OF THE INVENTION

A first object of the present invention is to provide the use of a polyolefin-based resin composition, especially a polypropylene-based resin composition, which is substantially prevented from suffering from accelerated oxidative deterioration of the polyolefin resin when positioned in contact with or extremely near to vinyl chloride-based resins upon use, and which can be stably used even in contact with or near to the vinyl chloride-based resins.

A second object of the present invention is to provide the use of a polyolefin based resin composition according to claim 1 and a combination of a vinyl chloride-based resin molded article and a molded article made of the polyolefin-based resin composition having the above-described properties.

As a result of extensive researches in view of the above objects, the present inventors have found that when the specific antioxidant is selectively used together with polyolefin-based resins, accelerated deterioration of the polyolefin-based resins can be remarkably prevented even when used in contact with or near to vinyl chloride-based resins. The present invention has been accomplished on the basis of this finding.

Thus, the present invention provides:

(1) A polyolefin-based resin composition used in contact with or near to vinyl chloride-based resins, wherein "near to" means that the polyolefin-based resin composition is disposed at such a distance of the vinyl chloride-based resin that the plasiticizers contained in the vinyl chloride-based resin or the hydrogen chloride produced by partial decomposition of the vinyl chloride-based resin can reach or come into contact with the polyolefin-based resin by migration, evaporation, diffusion, filling comprising:

(A) 100 parts by mass of a polyolefin-based resin; and
(B) 0.01 to 5 parts by mass of a phenol-based antioxidant containing no aliphatic ester group and/or a sulfur-based antioxidant containing no aliphatic ester group.

(2) A combination of a vinyl chloride-based resin molded article and a polyolefin-based resin molded article that are positioned in contact with or near to each other wherein "near to" means that the polyolefin-based resin composition is disposed at such a distance of the vinyl chloride-based resin that the plasticizers contained in the vinyl chloride-based resin or the hydrogen chloride produced by partial decomposition of the vinyl chloride-based resin can reach or come into contact with the polyolefin-based resin by migration, evaporation, diffusion, filling said polyolefin-based resin molded article being made of a polyolefin-based resin composition comprising:

(A) 100 parts by mass of a polyolefin-based resin; and
(B) 0.01 to 5 parts by mass of a phenol-based antioxidant containing no aliphatic ester group and/or a sulfur-based antioxidant containing no aliphatic ester group.

(3) The polyolefin-based resin composition according to the above aspect (1), further comprising (C) a metal deactivator containing no aliphatic ester in an amount of 0.01 to 5 parts by mass based on 100 parts by mass of the polyolefin-based resin.
(4) The polyolefin-based resin composition according to the above aspect (1), further comprising (D) a metal hydrate and/or a metal hydroxide in an amount of 50 to 250 parts by mass based on 100 parts by mass of the polyolefin-based resin.
(5) The polyolefin-based resin composition according to the above aspect (1), wherein said phenol-based antioxidant (B) is at least one compound selected from the group consisting of:

(i) 2,6-di-t-butyl-4-methyl phenol;
(ii) a compound represented by the general formula (I):

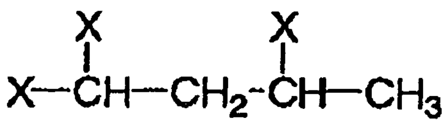
(I)

wherein X is a group represented by the general formula (II) with the proviso that the three X groups may be the same or different from each other:

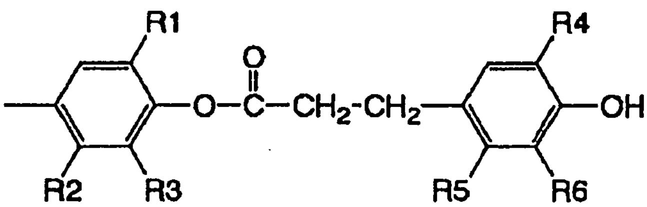
(II)

wherein R1 and R4 are independently $C_1$ to $C_8$ alkyl and may be the same or different from each other; and R2, R3, R5 and R6 are independently hydrogen or $C_1$ to $C_8$ alkyl and may be the same or different from each other;
(iii) 1,3,5-trimethyl-2,4,6-tris(3,5-di-t-butyl-4-hydroxybenzyl)benzene;
(iv) tris(3,5-di-t-butyl-4-hydroxybenzyl)isocyanurate; and
(v) 4,4'-butylidenebis-(3-methyl-6-t-butylphenol).

(6) The polyolefin-based resin composition according to the above aspect (3), wherein said metal deactivator (C) containing no aliphatic ester is 1,2-bis(3,5-di-t-butyl-4-hydroxyhydrocinnamoyl)hydrazine.
(7) The polyolefin-based resin composition according to the above aspect (4), wherein said metal hydrate and/or said metal hydroxide (D) are magnesium hydroxide and/or aluminum hydroxide.
(8) A polyolefin-based resin composition used in contact with or near to vinyl chloride-based resins, comprising 100

parts by mass of polypropylene; 0.01 to 3 parts by mass of 1,2-bis(3,5-di-t-butyl-4-hydroxyhydrocinnamoyl)hydrazine, and 0.01 to 5 parts by mass of at least one antioxidant selected from the group consisting of:

(i) 2,6-di-t-butyl-4-methyl phenol;
(ii) 1,1,3-tris{2-methyl-4-[3-(3,5-di-t-butyl-4-hydroxyphenyl)propionyloxy]-5-t-butyl phenyl}butane;
(iii) 1,3,5-trimethyl-2,4,6-tris(3,5-di-t-butyl-4-hydroxybenzyl)benzene;
(iv) tris(3,5-di-t-butyl-4-hydroxybenzyl)isocyanurate; and
(v) 4,4'-butylidenebis-(3-methyl-6-t-butylphenol).

(9) A polyolefin-based resin composition used in contact with or near to vinyl chloride-based resins, comprising 100 parts by mass of polypropylene; 50 to 250 parts by mass of magnesium hydroxide; and 0.01 to 5 parts by mass of at least one antioxidant selected from the group consisting of:

(i) 2,6-di-t-butyl-4-methyl phenol;
(ii) 1,1,3-tris{2-methyl-4-[3-(3,5-di-t-butyl-4-hydroxyphenyl)propionyloxy]-5-t-butyl phenyl}butane;
(iii) 1,3,5-trimethyl-2,4,6-tris(3,5-di-t-butyl-4-hydroxybenzyl)benzene;
(iv) tris(3,5-di-t-butyl-4-hydroxybenzyl)isocyanurate; and
(v) 4,4'-butylidenebis-(3-methyl-6-t-butylphenol).

(10) The combination according to the above aspect (2), wherein said vinyl chloride-based resin molded article is enclosed in said polyolefin-based resin molded article.
(11) The combination according to the above aspect (2), wherein said polyolefin-based resin molded article is enclosed in said vinyl chloride-based resin molded article.
(12) The combination according to the above aspect (2), wherein a layer made of said vinyl chloride-based resin molded article and a layer made of said polyolefin-based resin molded article are directly or indirectly laminated on each other.

As described above, when a polyolefin-based resin is used together with a phenol-based antioxidant containing no aliphatic ester group and/or a sulfur-based antioxidant containing no aliphatic ester group, and further blended, if required, with a metal deactivator and a metal hydrate and/or metal hydroxide, the resultant polyolefin-based resin composition can be remarkably prevented from suffering from oxidative deterioration of the polyolefin-based resin, even when used in contact with or near to vinyl chloride-based resins.

PREFERRED EMBODIMENT TO CARRY OUT THE INVENTION

The present invention is described in detail below.
Examples of the polyolefin-based resin usable in the present invention include poly-α-olefin resins such as low-density polyethylene, linear low-density polyethylene, medium-density polyethylene, high-density polyethylene, polypropylene, ethylene-propylene random copolymer, ethylene-propylene block copolymer, polybutene-1, ethylene-butene-1 random copolymer and polymethylpentene-1; copolymer of poly-α-olefin with vinyl monomer such as maleic anhydride-modified polypropylene; and mixtures thereof. Of these resins, preferred are polypropylene-based resin, and more preferred are ethylene-propylene block copolymer.
Specific examples of the vinyl chloride-based resins that can be effectively used together with the polyolefin-based resin composition of the present invention include polyvinyl chloride, vinyl chloride-vinyl acetate copolymer, vinyl chloride-alkyl acrylate copolymer, vinyl chloride-vinylidene chloride copolymer, chlorinated polyethylene.
The polyolefin-based resin composition of the present invention can show a more remarkable effect of preventing deterioration of the polyolefin-based resin when used together with vinyl chloride-based resins containing plasticizers, as compared to the conventional antioxidant-formulated polyolefin-based resin compositions.
Examples of the plasticizers include phthalic acid ester, phosphoric acid ester, aliphatic acid ester, chlorinated paraffin, trimellitic acid ester, epoxidated vegetable oil, pyromelltic acid ester, polyester or the like. These plasticizers are contained in an amount of 20 to 150 parts by mass and preferably 30 to 100 parts by mass based on 100 parts by mass of the vinyl chloride-based resin.
The wording "near to vinyl-chloride-based resins" used herein means that the polyolefin-based resin composition is disposed at such a distance that the plasticizers contained in the vinyl chloride-based resins or hydrogen chloride produced by partial decomposition of the vinyl-chloride-based resin can reach or come into contact with the polyolefin-based resin (A) by migration, evaporation or diffusion, filling.
The distance between the polyolefin-based resin composition and the vinyl chloride-based resins is usually 1 cm or smaller. However, in the case where the polyolefin-based resin molded article is surrounded by the vinyl chloride-based resin-containing molded article such as housings, covers and boxes, or vice versa, the above plasticizers or hydrogen chloride may reach or come into contact with the polyolefin-based resin (A) by migration, evaporation or diffusion, filling even though the distance therebetween is slightly larger, e.g., 50 cm or less.

Further, in the case where both the molded articles are placed at such a position where the temperature tends to increase to 50°C or higher, the above plasticizers or hydrogen chloride may also reach or come into contact with the polyolefin-based resin (A) by migration, evaporation or diffusion, filling. Therefore, even when these molded articles are spaced from each other at a slightly larger distance, for example, 50 cm or less, the above cases are considered to correspond to the condition of "near to vinyl chloride-based resins".

The antioxidant usable in the present invention is not limited to particular ones as long as it is composed of a phenol-based antioxidant containing no aliphatic ester group and/or a sulfur-based antioxidant containing no aliphatic ester group.

Of these antioxidants, the phenol-based antioxidant containing no aliphatic ester group is preferably at least one compound selected from the group consisting of the following compounds (i) to (v):

(i) 2,6-di-t-butyl-4-methyl phenol;

(ii) a compound represented by the general formula (I):

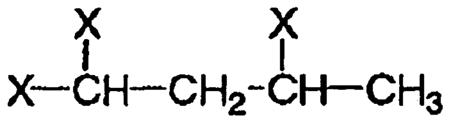

(I)

wherein X is a group represented by the general formula (II) with the proviso that the three X groups may be the same or different from each other:

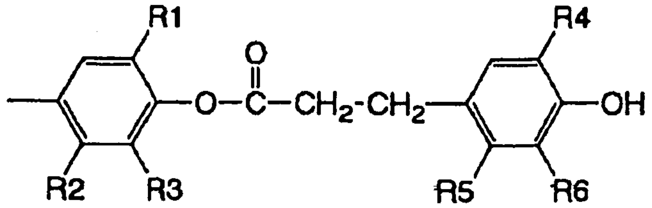

(II)

wherein R1 and R4 are independently $C_1$ to $C_8$ alkyl and may be the same or different from each other; and R2, R3, R5 and R6 are independently hydrogen or $C_1$ to $C_8$ alkyl and may be the same or different from each other;

(iii) 1,3,5-trimethyl-2,4,6-tris(3,5-di-t-butyl-4-hydroxybenzyl)benzene;

(iv) tris(3,5-di-t-butyl-4-hydroxybenzyl)isocyanurate; and

(v) 4,4'-butylidenebis-(3-methyl-6-t-butylphenol).

Of these antioxidants, preferred are compounds represented by the above general formula (I), and more preferred is 1,1,3-tris{2-methyl-4-[3.-3,5-di-t-butyl-4-hydroxyphenyl)propionyloxy]-5-t-butyl phenyl}butane (tradename: "GSY-242" available from A. P. I. Corporation; CAS Registry No. 180002-86-2).

In the general formula (II), R1 and R4 are independently $C_1$ to $C_8$ alkyl and may be the same or different from each other. Specific examples of the $C_1$ to $C_8$ alkyl group include linear, branched or cyclic alkyl groups such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl and 2-ethylhexyl. Of these alkyl groups, preferred are $C_1$ to $C_5$ alkyl groups, and more preferred is tert-butyl.

In the general formula (II), R2, R3, R5 and R6 are independently hydrogen or $C_1$ to $C_8$ alkyl and may be the same or different from each other. Specific examples of the $C_1$ to $C_8$ alkyl group include linear, branched or cyclic alkyl groups such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl and 2-ethylhexyl. Of these alkyl groups, preferred are $C_1$ to $C_5$ alkyl groups. More preferably, R2 and R3 are respectively hydrogen or methyl, R5 is hydrogen, and R5 is tert-butyl.

As the sulfur-based antioxidant containing no aliphatic ester group, there may be used bis(2-methyl-4-(3-n-alkylthiopropionyloxy)-5-tert-butylphenyl)sulfide (tradename: AO-23 available from Asahi Denka Co., Ltd.).

The phenol-based antioxidant containing no aliphatic ester group and/or the sulfur-based antioxidant containing no aliphatic ester group (B) are blended in an amount of 0.01 to 5 parts by mass, preferably 0.1 to 3 parts by mass and more preferably 0.2 to 2 parts by mass based on 100 parts by mass of the polyolefin-based resin.

When the amount of the antioxidant blended is less than 0.01 part by mass, substantially no anti-oxidizing effect is exhibited. When the amount of the antioxidant blended exceeds 3 parts by mass, the increase in anti-oxidizing effect corresponding to such a large amount of the antioxidant used is not attainable, and rather problems such as bleeding tend to occur.

The antioxidant used in the present invention is required to include an antioxidant containing no aliphatic ester group. The use of antioxidants containing an aliphatic ester group in a molecule thereof, for example, tetrakis(methylene-3-(3,5-di-t-butyl-4-hydroxyphenyl)propionate] methane (tradename: "IRGANOX 1010" available from Ciba Specialty Chemicals, Corp.) or n-octadecyl-3-(3',5'-di-t-butyl-4'-hydroxyphenyl)propionate (tradename: "IRGANOX 1076" available from Ciba Specialty Chemicals, Corp.) as well as other various sulfur-based antioxidants containing an aliphatic ester group in a molecule thereof is ineffective for the objects of the present invention unless these aliphatic ester group-containing antioxidants are used in combination with the antioxidants defined in the present invention.

Namely, if the phenol-based and/or sulfur-based antioxidants containing an aliphatic ester group in a molecule thereof or phosphorus-based antioxidants are used alone in resin members disposed in contact with or near to vinyl chloride-based resins, the anti-oxidizing effect is not sufficiently exhibited, thereby causing such a risk that the resin members are worn out.

The polyolefin-based resin composition of the present invention used, for example, as a covering or sheathing material for electric wires or cables as well as a tube and a tape, tends to be disposed not only in contact with or near to the vinyl chloride-based resins but also in contact with copper-containing materials. When the polyolefin-based resin composition is used in contact with the materials containing a metal such as copper, a metal deactivator such as a copper inhibitor (C) containing no aliphatic ester is preferably blended in the composition.

Examples of the preferred copper inhibitor include 1,2-bis(3,5-di-t-butyl-4-hydroxyhydrocinnamoyl)hydrazine (trade name: "IRGANOX MD 1024" available from Ciba Specialty Chemicals Corp.).

The metal deactivator is blended in an amount of 0.01 to 5 parts by mass, preferably 0.03 to 2 parts by mass and more preferably 0.05 to 1 part by mass based on 100 parts by mass of the polyolefin-based resin. When the amount of the metal deactivator blended is less than 0.01 part by mass, the metal deactivator exhibits substantially no effect. When the amount of the metal deactivator blended exceeds 3 parts by mass, an increased effect corresponding to such a large amount of the metal deactivator used is not attainable, and rather problems such as bleeding tend to occur. When a metal deactivator containing an aliphatic ester is used in resin members disposed in contact with or near to vinyl chloride-based resins, both the antioxidants and the metal deactivator fail to exhibit their sufficient effects, so that the resin members tend to be worn out owing to accelerated deterioration thereof.

The polyolefin-based resin composition of the present invention may also contain a metal hydrate and/or metal hydroxide (D) in order to improve a flame retardancy thereof. Examples of the metal hydrate and/or metal hydroxide (D) include magnesium hydroxide, aluminum hydroxide, hydrotalcite. Of these compounds, preferred is magnesium hydroxide, and more preferred is magnesium hydroxide having a particle size of 2 μm or less which is surface-coated with fatty acids, silane coupling agents. The metal hydrate and/or metal hydroxide (D) is blended in an amount of 50 to 250 parts by mass and preferably 60 to 200 parts by mass based on 100 parts by mass of the polyolefin-based resin. When the amount of the metal hydrate and/or metal hydroxide (D) blended per 100 parts by mass of the polyolefin-based resin is less than 50 parts by mass, it is difficult to use the resultant resin composition in such applications requiring a especially high flame retardancy, such as covering or sheathing materials for electric wires or cables. When the amount of the metal hydrate and/or metal hydroxide (D) blended exceeds 250 parts by mass, it is also difficult to apply the resin composition to covering or sheathing materials for electric wires or cables owing to too high hardness thereof, and further the obtained resin composition tends to be deteriorated in moldability and appearance.

One of specific examples of the polyolefin-based resin composition which is formulated by blending the above respective components with each other, is as follows:

| | |
|---|---|
| (A) Polypropylene | 100 parts by mass |
| (B) At least one antioxidant selected from the group consisting of the following compounds (i) to (v): | 0.01 to 5 parts by mass |
| (i) 2,6-di-t-butyl-4-methyl phenol; | |
| (ii) 1,1,3-tris{2-methyl-4-[3-(3,5-di-t-butyl-4-hydroxyphenyl)propionyloxy]-5-t-butyl phenyl}butane; | |
| (iii) 1,3,5-trimethyl-2,4,6-tris(3,5-di-t-butyl-4-hydroxybenzyl)benzene; | |
| (iv) tris(3,5-di-t-butyl-4-hydroxybenzyl)isocyanurate; and | |

(continued)

| | |
|---|---|
| (v) 4,4'-butylidenebis-(3-methyl-6-t-butylphenol) | |
| (C) 1,2-bis(3,5-di-t-butyl-4-hydroxyhydrocinnamoyl)hydrazine | 0.01 to 3 parts by mass |
| (D) Magnesium hydroxide | 50 to 250 parts by mass |

The thus prepared polyolefin-based resin composition can exhibit not only a sufficient anti-oxidizing effect even when applied to members disposed in contact with or near to the vinyl chloride-based resins, but also a good flame retardancy with less problems such as generation of dioxin as compared to that of the vinyl chloride-based resins.

The polyolefin-based resin composition of the present invention may further contain, if required, various fillers and additives unless the addition of these fillers and additives adversely affects the objects of the present invention.

Examples of the fillers include inorganic fillers such as calcium carbonate, talc, glass fibers, mica, whiskers and clays. Examples of the additives include antioxidants, carbon black, lubricants, ultraviolet absorbers, weather-proofing agents such as light stabilizers, pigments, silicone-based polymers, ultrahigh-molecular polyethylene. These fillers or additives may be blended in an amount of 0.1 to 20 parts by mass based on 100 parts by mass of the polyolefin-based resin.

Further, when the polyolefin-based resin composition of the present invention should be formulated especially so as to exhibit a non-halogen-based flame retardancy, the resin composition may also contain, for example, elastomers modified with carboxylic anhydrides or derivatives thereof, thermoplastic elastomers such as styrene-based hydrogenated polymers.

The polyolefin-based resin composition of the present invention can more sufficiently exhibit its properties when used as a material for molded articles disposed in contact with or near to vinyl chloride-based resins.

Examples of the combination of a molded article containing the polyolefin-based resin composition of the present invention (hereinafter occasionally referred to as a "polyolefin-based resin molded article") and a vinyl chloride-based resin molded article (polyolefin-based resin molded article/vinyl chloride-based resin molded article) include covering or sheathing material for electric wires or cables/tape for bundling electric wires or cables; covering or sheathing material for electric wires or cables/cover or housing for surrounding bundles of electric wires or cables; covering or sheathing material for electric wires or cables/covering or sheathing material for electric wires or cables; and vice versa in their materials.

That is, according to the second aspect of the present invention, there is provided a combination of a vinyl chloride-based resin molded article and a polyolefin-based resin molded article in which both the molded articles are positioned in contact with or near to each other, and the polyolefin-based resin composition comprises (A) 100 parts by mass of a polyolefin-based resin; and (B) 0.01 to 5 parts by mass of a phenol-based antioxidant containing no aliphatic ester group and/or a sulfur-based antioxidant containing no aliphatic ester group. All of the definitions and requirements described as to the polyolefin-based resin composition according to the first aspect of the present invention are involved in the second aspect of the present invention.

Further, the second aspect of the present invention includes the following specific embodiments:

(1) Combination as defined in claim 2 wherein the vinyl chloride-based resin molded article is enclosed in the polyolefin-based resin molded article;
(2) Combination as defined in claim 2 wherein the polyolefin-based resin molded article is enclosed in the vinyl chloride-based resin molded article; and
(3) Combination as defined in claim 2 wherein a layer made of the vinyl chloride-based resin molded article and a layer made of the polyolefin-based resin molded article are directly or indirectly laminated on each other.

EXAMPLES

A mixture prepared by blending respective components for resin compositions with each other at a mixing ratio as shown in Tables 1 and 2, was melt-kneaded using a twin-screw kneader "TEM35" available from Toshiba Kikai Co., Ltd., to obtain pellets having various resin compositions. The thus obtained pellets were formed into a 2 mm-thick dumbbell-shaped test specimen using an injection-molding machine. A commercially available vinyl chloride adhesive tape was attached to a central portion of the dumbbell-shaped test specimen, and allowed to stand in an oven maintained at 140°C. After the elapse of a predetermined time as shown in Table 1 or 2, the respective test specimens were taken out of the oven, and subjected to tensile test according to JIS K 7162 to measure a tensile strength and an elongation thereof. Meanwhile, the elongation of the respective test specimens before the heat treatment was similarly measured to calculate an elongation retention according to the following formula:

$$\text{Elongation Retention} = [(L - M) / L] \times 100\ (\%)$$

wherein L is an elongation (mm) of the test specimen before the heat treatment; and M is an elongation (mm) of the test specimen after the heat treatment.

The elongation retention is an index indicating a degree of deterioration.

The test specimen solely (without attachment of a vinyl chloride adhesive tape) as a control sample was allowed to stand in a separate oven maintained at 140°C. After the elapse of the predetermined time as shown in Table 1 or 2, the test specimen was taken out of the oven, and similarly subjected to tensile test according to JIS K 7162, and the elongation retention was similarly determined. The results of these measurements are shown in Tables 1 and 2.

Meanwhile, the polyolefin-based resin compositions shown in Table 1 are those for natural materials, and the polyolefin-based resin compositions shown in Table 2 are those for non-halogen flame retardant formulation.

Table 1: Natural Products

| Composition and Measurement Results | | | | | | | |
|---|---|---|---|---|---|---|---|
| | Component | Examples | | | | Comparative Examples | |
| | | 1 | 2 | 3 | 4 | 1 | 2 |
| Polyolefin | J-466HP | 100 | 100 | 100 | 100 | 100 | 100 |
| Phenol-based antioxidant | GSY-242 | 0.5 | 0 | 0 | 0 | 0 | 0 |
| | Irg-1330 | 0 | 0.5 | 0 | 0 | 0 | 0 |
| | AO-20 | 0 | 0 | 0.5 | 0 | 0 | 0 |
| | BHT | 0 | 0 | 0 | 0.2 | 0 | 0 |
| | Irg-1010 | 0 | 0 | 0 | 0 | 0.5 | 0 |
| Sulfur-based antioxidant | SUMILIZER-TPL | 0 | 0 | 0 | 0 | 0 | 0.5 |
| Tensile yield stress (MPa) | | 20 | 20 | 20 | 20 | 20 | 21 |
| Tensile stress at break (MPa) | | 32 | 32 | 32 | 32 | 32 | 32 |
| Tensile elongation at break (%) | | 400 | 420 | 400 | 410 | 380 | 410 |
| Tensile modulus (MPa) | | 1140 | 1150 | 1110 | 1140 | 1130 | 1150 |
| Elongation retention (at 140°) (%) | after 144 hr | 71 | 69 | 66 | 68 | 37 | 54 |
| | after 336 hr | 49 | 44 | 50 | 45 | 4 | 3 |
| | after 480 hr | 10 | 8 | 7 | 2 | -- | -- |
| | after 480 hr without vinyl chloride tape | 49 | 52 | 54 | 55 | 66 | 63 |

Table 2: Non-Halogen Formulation Products

| Composition and Measurement Results | | | | | | |
|---|---|---|---|---|---|---|
| | Component | Examples | | | Comparative Examples | |
| | | 5 | 6 | 7 | 3 | 4 |
| Polyolefin | J-466HP | 11 | 11 | 11 | 11 | 11 |
| | MR110M | 5 | 5 | 5 | 5 | 5 |
| | AD89G | 5 | 5 | 5 | 5 | 5 |
| | M142E | 35 | 35 | 35 | 35 | 35 |

(continued)

| Composition and Measurement Results | | | | | | |
|---|---|---|---|---|---|---|
| | Component | Examples | | | Comparative Examples | |
| | | 5 | 6 | 7 | 3 | 4 |
| Phenol-based antioxidant | GSY-242 | 0.5 | 0 | 0 | 0 | 0 |
| | Irg-1330 | 0 | 0.5 | 0 | 0 | 0 |
| | AO-20 | 0 | 0 | 0.5 | 0 | 0 |
| | Irg-1010 | 0 | 0 | 0 | 0.4 | 0.4 |
| Phosphorus-b ased antioxidant | Irg-168 | 0 | 0 | 0 | 0.2 | 0.2 |
| Metal deactivator | MD1024 | 0.2 | 0.2 | 0.2 | 0 | 0 |
| | CDA-1 | 0 | 0 | 0 | 0.3 | 0 |
| | NOWGAURD XD-L | 0 | 0 | 0 | 0 | 0.2 |
| Flame retardant | Mg hydroxide | 40 | 40 | 40 | 40 | 40 |
| Silicone polymer | BY27-001 | 4 | 4 | 4 | 4 | 4 |
| Tensile stress at break (MPa) | | 18.1 | 19.0 | 19.0 | 15.6 | 18.0 |
| Tensile elongation at break (%) | | 170 | 200 | 200 | 210 | 190 |
| Tensile modulus (MPa) | | 325 | 295 | 295 | 284 | 316 |
| Elongation retention (at 140°) (%) | after 68 hr on copper | 64.7 | 60.0 | 60.0 | 52.4 | 57.9 |
| | after 221 hr on copper | 64.7 | 55.0 | 55.0 | 10.5* | 57.9 |
| | after 384 hr on copper | 51.8 | 55.0** | 55.0** | 0.0*** | 15.0* |
| | after 384 hr on aluminum with vinyl chloride tape | 55.9 | 50.0 | 50.0 | 14.0 | 25.0 |
| | after 384 hr on aluminum without vinyl chloride tape | 53.5 | 50.0 | 50.0 | 48.0 | 52.6 |
| Note: * Somewhat discolored; ** Slightly discolored; *** Worn out | | | | | | |

Meanwhile, the symbols of the respective components as shown in Tables represent the followings:

(A) Polyolefin-based resin:

J-466HP: Block polypropylene available from Idemitsu Petrochemical Co., Ltd.

M110 B (formerly named as MR110M): Maleic acid-modified thermoplastic elastomer available from Idemitsu Petrochemical Co., Ltd.

AD89G: Maleic acid-modified polypropylene available from Idemitsu Petrochemical Co., Ltd.

M142E: Thermoplastic elastomer available from Idemitsu Petrochemical Co., Ltd. (B) Antioxidant:

Phenol-based antioxidant containing no aliphatic ester group

GSY-242:

1,1,3-tris{2-methyl-4-[3-(3,5-di-t-butyl-4-hydroxyphenyl)propionyloxy]-5-t-butyl phenyl}butane available from A. P. I. Corporation

Irg-1330:

1,3,5-trimethyl-2,4,6-tris(3,5-di-t-butyl-4-hydroxybenzyl)benzene available from Ciba Specialty Chemicals,

Corp.

AO-20: tris(3,5-di-t-butyl-4-hydroxybenzyl)isocyanurate available from Asahi Denka Kogyo Co., Ltd.

BHT: 2,6-di-t-butyl-4-methyl phenol available from Sumitomo Chemical Co., Ltd.

Phenol-based antioxidant containing an aliphatic ester group

Irg-1010:

tetrakis[methylene-3-(3,5-di-t-butyl-4-hydroxyphenyl)propionate]methane available from Ciba Specialty Chemicals, Corp.

Phosphorus-based antioxidant

Irg-168: tris(2,4-di-t-butylphenyl)phosphite available from Ciba Specialty Chemicals, Corp.

Sulfur-based antioxidant

SUMILIZER-TPL: dilauryl-3,3'-thiopropionate available from Sumitomo Chemical Co., Ltd.

(C) Metal deactivator (Copper inhibitor):

MD1024: 1,2-bis(3,5-di-t-butyl-4-hydroxyhydrocinnamoyl)hydrazine available from Ciba Specialty Chemicals, Corp.: IRGANOX MD1024

CDA-1: 3-(N-salicyloyl)amino-1,2,4-triazole available from Asahi Denka Kogyo Co., Ltd.

NOWGUARD XD-L: 2,2'-oxalyl diamide bis(ethyl-3-(3,5-di-t-butyl-4-hydroxyphenyl)propionate available from Uniroyal Chemical Co., Inc.

(E) Other additives:

BY27-001: Silicone polymer available from Toray Dow Corning Silicone Co., Ltd.

As is apparent from the results of elongation retention shown in Tables 1 and 2, it was confirmed that the polypropylene resin compositions of the present invention exhibited a good stability. As shown in Table 1, the polypropylene resin compositions of the present invention still maintained an almost good elongation retention even after the elapse of 336 hours, whereas those of Comparative Examples using no antioxidant according to the present invention were rapidly deteriorated in elongation retention. Further, in Table 2, there are shown results of a stability test for the resin compositions further containing a metal deactivator which test was conducted under such a condition contacting with copper. As shown in Table 2, the polypropylene resin compositions of the present invention showed a good elongation retention even after the elapse of 221 hours, and were merely slightly discolored even after the elapse of 384 hours, whereas those of Comparative Examples using neither antioxidant nor metal deactivator according to the present invention were rapidly deteriorated in elongation retention, and were significantly discolored or worn out.

INDUSTRIAL APPLICABILITY

The polyolefin-based resin composition containing a specific phenol-based antioxidant containing no aliphatic ester group and/or a specific sulfur-based antioxidant containing no aliphatic ester group according to the present invention can exhibit a sufficient anti-oxidizing effect even when used in contact with or near to vinyl chloride-based resins, and can be remarkably inhibited from suffering from deterioration due to the existence of the vinyl chloride-based resins.

## Claims

**1.** Use of a polyolefin-based resin composition in contact with or near to vinyl chloride-based resins,
wherein "near to" means that the polyolefin-based resin composition is disposed at such a distance of the vinyl chloride-based resin that the plasiticizers contained in the vinyl chloride-based resin or the hydrogen chloride produced by partial decomposition of the vinyl chloride-based resin can reach or come into contact with the polyolefin-based resin by migration, evaporation, diffusion, filling,
the polyolefin-based resin composition comprising:

(A) 100 parts by mass of a polyolefin-based resin; and
(B) 0.01 to 5 parts by mass of a phenol-based antioxidant containing no aliphatic ester group and/or a sulfur-based antioxidant containing no aliphatic ester group.

**2.** The use according to claim 1, the polyolefin-based resin composition further comprising (C) a metal deactivator containing no aliphatic ester in an amount of 0.01 to 5 parts by mass based on 100 parts by mass of the polyolefin-based resin.

**3.** The use according to claim 1 or 2, the polyolefin-based resin composition further comprising (D) a metal hydrate and/or a metal hydroxide in an amount of 50 to 250 parts by mass based on 100 parts by mass of the polyolefin-based resin.

**4.** The use according to any of claims 1 to 3, wherein
said phenol-based antioxidant (B) is at least one compound selected from the group consisting of:

(i) 2,6-di-t-butyl-4-methyl phenol;
(ii) a compound represented by the general formula (I)

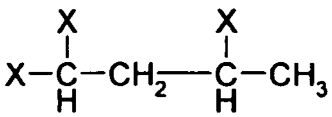

(I)

wherein X is a group represented by the general formula (II) with the proviso that the three X groups may be the same or different from each other:

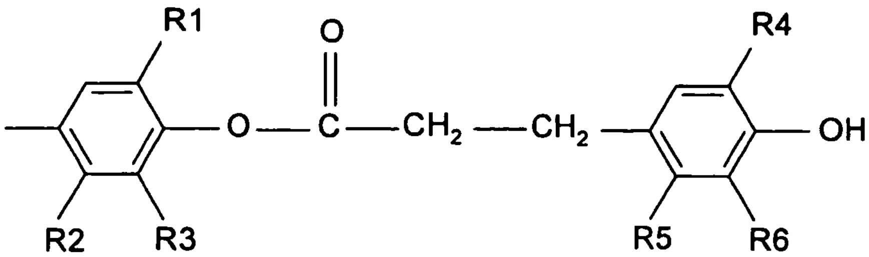

(II)

wherein R1 and R4 are independently $C_1$ to $C_8$ alkyl and may be the same or different from each other; and R2, R3, R5 and R6 are independently hydrogen or $C_1$ to $C_8$ alkyl and may be the same or different from each other;
(iii) 1,3,5-trimethyl-2,4,6-tris(3,5-di-t-butyl-4-hydroxybenzyl)- benzene;
(iv) tris(3,5-di-t-butyl-4-hydroxybenzyl)isocyanurate; and
(v) 4,4'-butylidenebis-(3-methyl-6-t-butylphenol).

**5.** The use according to claim 2, wherein said metal deactivator (C) containing no aliphatic ester is 1,2-bis(3,5-di-t-butyl-4-hydroxyhydrocinnamoyl)hydrazine.

**6.** The use according to claim 3, wherein said metal hydrate and/or said metal hydroxide (D) are magnesium hydroxide and/or aluminum hydroxide.

**7.** The use according to any of claims 1 to 6, wherein the polyolefin-based resin composition comprises 100 parts by mass of polypropylene; 0.01 to 3 parts by mass of 1,2-bis(3,5-di-t-butyl-4- hydroxyhydrocinnamoyl)hydrazine, and 0.01 to 5 parts by mass of at least one phenol-based antioxidant selected from the group consisting of:

(i) 2,6-di-t-butyl-4-methyl phenol;
(ii) 1,1,3-tris{2-methyl-4-[3-(3,5-di-t-butyl-4-hydroxyphenyl)-propionyloxy]-5-t-butylphenyl}butane;
(iii) 1,3,5-trimethyl-2,4,6-tris(3,5-di-t-butyl-4-hydroxybenzyl)- benzene;
(iv) tris(3,5-di-t-butyl-4-hydroxybenzyl)isocyanurate; and

(v) 4,4'-butylidenebis-(3-methyl-6-t-butylphenol).

**8.** The use according to any of claims 1 to 7, wherein the polyolefin-based resin composition comprises 100 parts by mass of polypropylene; 50 to 250 parts by mass of magnesium hydroxide; and 0.01 to 5 parts by mass of at least one phenol-based antioxidant selected from the group consisting of

(i) 2,6-di-t-butyl-4-methyl phenol;
(ii) 1,1,3-tris{2-methyl-4-[3-(3,5-di-t-butyl-4-hydroxyphenyl)-propionyloxyj-5-t-butylphenyl}butane;
(iii) 1,3,5-trimethyl-2,4,6-tris(3,5-di-t-butyl-4-hydroxybenzyl)- benzene;
(iv) tris(3,5-di-t-butyl-4-hydroxybenzyl)isocyanurate; and
(v) 4,4'-butylidenebis-(3-methyl-6-t-butylphenol).

**9.** Use of a polyolefin-based resin molded article which is made of a polyolefin-based resin composition as defined in any of claims 1 to 8 in a combination with a vinyl chloride-based resin molded article,
whereby the two articles are positioned in contact with or near to each other,
wherein "near to" means that the polyolefin-based resin article is disposed at such a distance of the vinyl chloride-based resin article that the plasiticizers contained in the vinyl chloride-based resin or the hydrogen chloride produced by partial decomposition of the vinyl chloride-based resin can reach or come into contact with the polyolefin-based resin by migration, evaporation, diffusion, filling.

**10.** The use according to claim 9, wherein said vinyl chloride-based resin molded article is enclosed in said polyolefin-based resin molded article.

**11.** The use according to claim 9, wherein said polyolefin-based resin molded article is enclosed in said vinyl chloride-based resin molded article.

**12.** The use according to claim 9, wherein a layer made of said vinyl chloride-based resin molded article and a layer made of said polyolefin-based resin molded article are directly or indirectly laminated on each other.

**Patentansprüche**

**1.** Verwendung einer Harzzusammensetzung auf Polyolefin-Basis in Kontakt mit oder nahe benachbart zu Harzen auf Vinylchlorid-Basis,
wobei "nahe benachbart" bedeutet, dass die Harzzusammensetzung auf Polyolefin-Basis in einem solchen Abstand zum Harz auf Vinylchlorid-Basis angeordnet ist, dass die im Harz auf Vinylchlorid-Basis enthaltenen Weichmacher oder der durch partielle Zersetzung des Harzes auf Vinylchlorid-Basis gebildete Chlorwasserstoff das Harz auf Polyolefin-Basis durch Migration, Verdampfen, Diffusion, Füllen erreichen oder damit in Kontakt kommen kann,
wobei die Harzzusammensetzung auf Polyolefin-Basis umfasst:

(A) 100 Gewichtsteile eines Harzes auf Polyolefin-Basis; und
(B) 0,01 bis 5 Gewichtsteile eines Antioxidans auf Phenol-Basis, das keine aliphatische Estergruppe enthält, und/oder eines Antioxidans auf Schwefel-Basis, das keine aliphatische Estergruppe enthält.

**2.** Verwendung nach Anspruch 1, wobei die Harzzusammensetzung auf Polyolefinbasis darüber hinaus umfasst (C) einen Metalldeaktivator, der keinen aliphatischen Ester enthält, in einer Menge von 0,01 bis 5 Gewichtsteilen bezogen auf 100 Gewichtsteile des Harzes auf Polyolefin-Basis.

**3.** Verwendung nach Anspruch 1 oder 2, wobei die Harzzusammensetzung auf Polyolefin-Basis darüber hinaus umfasst (D) ein Metallhydrat und/oder ein Metallhydroxid in einer Menge von 50 bis 250 Gewichtsteilen bezogen auf 100 Gewichtsteile des Harzes auf Polyolefin-Basis.

**4.** Verwendung nach einem der Ansprüche 1 bis 3, wobei das Antioxidant auf Phenol-Basis (B) mindestens eine Verbindung ist, die ausgewählt wird aus der Gruppe, die besteht aus:

(i) 2,6-Di-t-butyl-4-methylphenol;
(ii) eine durch die allgemeine Formel (I) dargestellte Verbindung

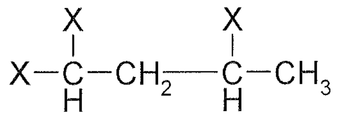

(I)

wobei X eine durch die allgemeine Formel (II) dargestellte Gruppe ist, unter der Voraussetzung, dass die drei Gruppen X gleich oder verschieden voneinander sein können:

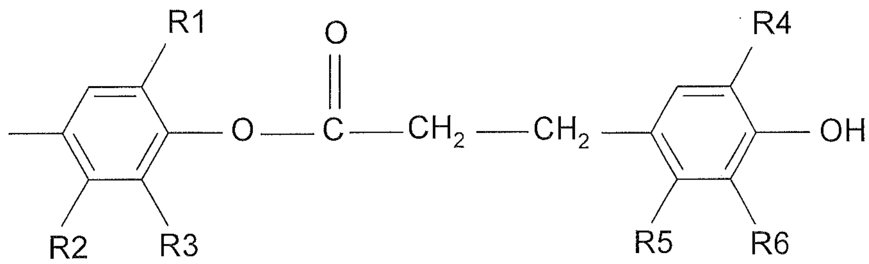

(II)

wobei R1 und R4 unabhängig voneinander $C_1$ bis $C_8$ Alkyl sind und gleich oder verschieden voneinander sein können; und R2, R3, R5 und R6 unabhängig voneinander Wasserstoff oder $C_1$ bis $C_8$ Alkyl sind und gleich oder verschieden voneinander sein können;

(iii) 1,3,5-Trimethyl-2,4,6-tris(3,5-di-t-butyl-4-hydroxybenzyl)-benzol;
(iv)Tris(3,5-di-t-butyl-4-hydroxybenzyl)isocyanurat; und
(iv) 4,4'-Butylidenebis-(3-methyl-6-t-butylphenol).

**5.** Verwendung nach Anspruch 2, wobei der Metalldeaktivator (C), der keinen aliphatischen Ester enthält, 1,2-Bis(3,5-di-t-butyl-4-hydroxyhydrocinnamoyl)hydrazin ist.

**6.** Verwendung nach Anspruch 3, wobei das Metallhydrat und/oder Metallhydroxid (D) Magnesiumhydroxid und/oder Aluminiumhydroxid sind.

**7.** Verwendung nach einem der Ansprüche 1 bis 6, wobei die Harzzusammensetzung auf Polyolefin-Basis 100 Gewichtsteile Polypropylen; 0,01 bis 3 Gewichtsteile 1,2-Bis(3,5-di-t-butyl-4-hydroxyhydrocinnamoyl)hydrazin und 0,01 bis 5 Gewichtsteile mindestens eines Antioxidans auf Phenol-Basis umfasst, das ausgewählt wird aus der Gruppe, die besteht aus:

(i) 2,6-Di-t-butyl-4-methylphenol;
(ii) 1,1,3-Tris{2-methyl-4-[3-(3,5-di-t-butyl-4-hydroxyphenyl)-propionyloxy]-5-t-butylphenyl}butan;
(iii) 1,3,5-Trimethyl-2,4,6-tris(3,5-di-t-butyl-4-hydroxybenzyl)-benzol;
(iv) Tris(3,5-di-t-butyl-4-hydroxybenzyl)isocyanurat; und
(v) 4,4'-Butylidenebis-(3-methyl-6-t-butylphenol).

**8.** Verwendung nach einem der Ansprüche 1 bis 7, wobei die Harzzusammensetzung auf Polyolefin-Basis 100 Gewichtsteile Polypropylen; 50 bis 250 Gewichtsteile Magnesiumhydroxid; und 0,01 bis 5 Gewichtsteile mindestens eines Antioxidans auf Phenol-Basis umfasst, das ausgewählt wird aus der Gruppe, die besteht aus:

(i) 2,6-Di-t-butyl-4-methylphenol;
(ii) 1,1,3-Tris{2-methyl-4-[3-(3,5-di-t-butyl-4-hydroxyphenyl)-propionyloxy]-5-t-butylphenyl}butan;
(iii) 1,3,5-Trimethyl-2,4,6-tris(3,5-di-t-butyl-4-hydroxybenzyl)-benzol;
(iv) Tris(3,5-di-t-butyl-4-hydroxybenzyl)isocyanurat; und
(v) 4,4'-Butylidenebis-(3-methyl-6-t-butylphenol).

**9.** Verwendung eines Formteils auf Polyolefinharz-Basis, welches hergestellt ist aus einer Harzzusammensetzung auf Polyolefin-Basis wie in einem der Ansprüche 1 bis 8 definiert in Kombination mit einem Formteil auf Vinylchloridharz-Basis,
wobei die beiden Formteile in Kontakt miteinander oder nahe benachbart angeordnet sind,

wobei "nahe benachbart" bedeutet, dass das Formteil auf Polyolefinharz-Basis in einem solchen Abstand zum Formteil auf Vinylchlorid-Basis angeordnet ist, dass die im Harz auf Vinylchlorid-Basis enthaltenen Weichmacher oder der durch partielle Zersetzung des Harzes auf Vinylchlorid-Basis gebildete Chlorwasserstoff das Harz auf Polyolefin-Basis durch Migration, Verdampfen, Diffusion, Füllen erreichen oder damit in Kontakt kommen kann.

**10.** Verwendung nach Anspruch 9, wobei das Formteil auf Vinylchloridharz-Basis im Formteil auf Polyolefinharz-Basis eingeschlossen ist.

**11.** Verwendung nach Anspruch 9, wobei das Formteil auf Polyolefinharz-Basis im Formteil auf Vinylchloridharz-Basis eingeschlossen ist.

**12.** Verwendung nach Anspruch 9, wobei eine Schicht aus dem Formteil auf Vinylchloridharz-Basis und eine Schicht aus dem Formteil auf Polyolefinharz-Basis direkt oder indirekt aufeinander laminiert sind.

## Revendications

**1.** Utilisation d'une composition de résine à base de polyoléfine en contact avec ou à proximité de résines à base de chlorure de vinyle,
où "à proximité de" signifie que la composition de résine à base de polyoléfine est disposée à une telle distance de la résine à base de chlorure de vinyle que les plastifiants contenus dans la résine à base de chlorure de vinyle ou le chlorure d'hydrogène produit par la décomposition partielle de la résine à base de chlorure de vinyle peuvent atteindre ou entrer en contact avec la résine à base de polyoléfine par migration, évaporation, diffusion, remplissage, la composition de résine à base de polyoléfine comprenant :

(A) 100 parties en masse d'une résine à base de polyoléfine ; et
(B) 0,01 à 5 parties en masse d'un antioxydant à base de phénol ne contenant aucun groupe ester aliphatique et/ou d'un antioxydant à base de soufre ne contenant aucun groupe ester aliphatique.

**2.** Utilisation selon la revendication 1, la composition de résine à base de polyoléfine comprenant en plus (C) un désactivateur de métaux ne contenant aucun ester aliphatique en une quantité de 0,01 à 5 parties en masse sur la base de 100 parties en masse de la résine à base de polyoléfine.

**3.** Utilisation selon la revendication 1 ou 2, la composition de résine à base de polyoléfine comprenant en plus (D) un hydrate métallique et/ou un hydroxyde métallique en une quantité de 50 à 250 parties en masse sur la base de 100 parties en masse de la résine à base de polyoléfine.

**4.** Utilisation selon l'une des revendications 1 à 3, dans laquelle
ledit antioxydant à base de phénol (B) est au moins un composé sélectionné du groupe constitué de

(i) 2,6-di-t-butyl-4-méthyl phénol ;
(ii) un composé représenté par la formule générale (I)

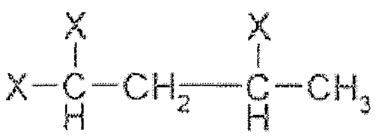

(I)

où x est un groupe représenté par la formule générale (II) à condition que les trois groupes X puissent être identiques ou différents entre eux :

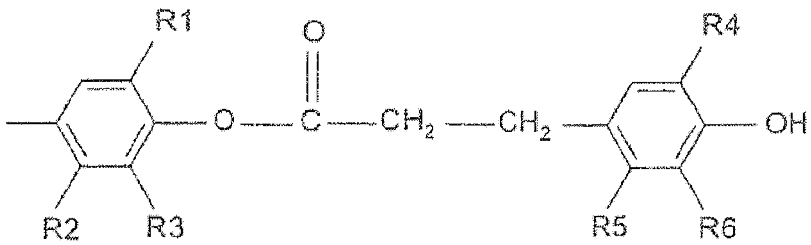

(II)

où R1 et R4 sont indépendamment un alkyle en $C_1$ à $C_8$ et peuvent être identiques ou différents entre eux ; et R2, R3, R5 et R6 sont indépendamment de l'hydrogène ou un alkyle en $C_1$ à $C_8$ et peuvent être identiques ou différents entre eux ;
(iii) 1,3,5-triméthyl-2,4,6-tris(3,5-di-t-butyl-4-hydroxybenzyl)-benzène ;
(iv) tris(3,5-di-t-butyl-4-hydroxybenzyl)isocyanurate ; et
(iii) 4,4'-butylidenebis-(3-méthyl-6-t-butylphénol).

**5.** Utilisation selon la revendication 2, dans laquelle ledit désactivateur de métaux (C) ne contenant aucun ester aliphatique est 1,2-bis(3,5-di-t-butyl-4-hydroxyhydrocinnamoyl)hydrazine.

**6.** Utilisation selon la revendication 3, dans laquelle ledit hydrate métallique et/ou ledit hydroxyde métallique (D) sont de l'hydroxyde de magnésium et/ou de l'hydroxyde d'aluminium.

**7.** Utilisation selon l'une des revendications 1 à 6, dans lequel la composition de résine à base de polyoléfine comprend 100 parties en masse de polypropylène ; 0,01 à 3 parties en masse de 1,2-bis(3,5-di-t-butyl-4-hydroxyhydrocinnamoyl)hydrazine, et 0,01 à 5 parties en masse d'au moins un antioxydant à base de phénol sélectionné du groupe constitué de :

(i) 2,6-di-t-butyl-4-méthyl phénol ;
(ii) 1,1,3-tris{2-méthyl-4-[3-(3,5-di-t-butyl-4-hydroxyphénol)-propionyloxy]-5-t-butylphényl}butane ;
(iii) 1,3,5-triméthyl-2-4-6-tris(3,5-di-t-butyl-4-hydroxybenzyl)-benzène ;
(iv) tris(3,5-di-t-butyl-4-hydroxybenzyl)isocyanurate ; et
(v) 4,4'-butylidenebis-(3-méthyl-6-t-butylphénol).

**8.** Utilisation selon l'une des revendications 1 à 7, dans laquelle la composition de résine à base de polyoléfine comprend 100 parties en masse de polypropylène ; 50 à 250 parties en masse d'hydroxyde de magnésium ; et 0,01 à 5 parties en masse d'au moins un antioxydant à base de phénol sélectionné du groupe constitué de

(i) 2,6-di-t-butyl-4-méthyl phénol ;
(ii) 1,1,3-tris{2-méthyl-4-[3-(3,5-di-t-butyl-4-hydroxyphényl)-propionyloxy]-5-t-butylphényl}butane ;
(iii) 1,3,5-triméthyl-2,4,6-tris(3,5-di-t-butyl-4-hydroxybenzyl)-benzène ;
(iv) tris(3,5-di-t-butyl-4-hydroxybenzyl)isocyanurate ; et
(vi) 4,4'-butylidenebis-(3-méthyl-6-t-butylphénol).

**9.** Utilisation d'un article moulé de résine à base de polyoléfine qui est fait d'une composition de résine à base de polyoléfine comme défini dans l'une des revendications 1 à 8 dans une combinaison avec un article moulé de résine à base de chlorure de vinyle,
grâce à quoi les deux articles sont positionnés en étant en contact l'un avec l'autre ou l'un à proximité de l'autre, où "à proximité de" signifie que l'article de résine à base de polyoléfine est disposé à une telle distance de l'article de résine à base de chlorure de vinyle que les plastifiants contenus dans la résine à base de chlorure de vinyle ou le chlore d'hydrogène produit par une décomposition partielle de la résine à base de chlorure de vinyle peuvent atteindre ou entrer en contact avec la résine à base de polyoléfine par migration, évaporation, diffusion, remplissage.

**10.** Utilisation selon la revendication 9, dans laquelle ledit article moulé de résine à base de chlorure de vinyle est enfermé dans ledit article moulé de résine à base de polyoléfine.

**11.** Utilisation selon la revendication 9, dans laquelle ledit article moulé de résine à base de polyoléfine est enfermé dans ledit article moulé de résine à base de chlorure de vinyle.

**12.** Utilisation selon la revendication 9, dans laquelle une couche faite dudit article moulé de résine à base de chlorure de vinyle et une couche faite dudit article moulé de résine à base de polyoléfine sont directement ou indirectement stratifiées l'une sur l'autre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO6234934 B